# EUROPEAN PATENT SPECIFICATION

(11) **EP 1 798 912 B1**
(45) Date of publication and mention of the grant of the patent: **14.03.2012**
(21) Application number: 05806202.7
(22) Date of filing: 17.10.2005
(51) Int. Cl.: H04L 12/56, H04L 12/24

(54) **A METHOD FOR TRANSMITTING CONTROL MESSAGE IN MPLS RING NETWORK**
VERFAHREN ZUR ÜBERTRAGUNG EINER STEUERNACHNICH IN EINEM MPLS-RINGNETZ
PROCEDE POUR LA TRANSMISSION DE MESSAGE DE COMMANDE DANS UN RESEAU EN BOUCLE A COMMUTATION MULTIPROTOCOLE PAR ETIQUETTE

(30) Priority: 15.10.2004 CN 200410083665
(43) Date of publication of application: 20.06.2007
(73) Proprietor: Huawei Technologies Co., Ltd., Longgang District, Shenzhen Guangdong 518129 (CN)
(72) Inventor: WAN, Huaixue Huawei Administration Building, Shenzhen, Guangdong 518129 (CN); SHI, Yuli Huawei Administration Building, Shenzhen, Guangdong 518129 (CN); QUAN, Xingyue Huawei Administration Building, Shenzhen, Guangdong 518129 (CN); YANG, Yang Huawei Administration Building, Shenzhen, Guangdong 518129 (CN); LI, Xixiang Huawei Administration Building, Shenzhen, Guangdong 518129 (CN)
(74) Representative: Isarpatent
(86) International application number: PCT/CN2005/001696
(87) International publication number: WO 2006/039871

(56) References cited:
- EP-A1- 1 802 048
- WO-A1-01/29682
- CN-A- 1 455 568
- US-A1- 2003 108 029
- US-A1- 2003 185 217
- US-A1- 2004 170 173
- US-A1- 2004 174 879
- "Operation & Maintenance mechanism for MPLS networks; Y.1711 (02/04)" ITU-T STANDARD IN FORCE (I), INTERNATIONAL TELECOMMUNICATION UNION, GENEVA, CH, no. Maintenance mechanis, 12 February 2004 (2004-02-12), XP017404384

## Description

### Field of the Invention

The present invention relates to network communication technologies, and particularly, to a method for transmitting control information in an MPLS ring network.

### Background of the Invention

In existing network communications, Resilient Packet Ring (RPR) is an economical solution in a Metropolitan Area Network (MAN) due to its advantages of multiple technologies, such as the Ethernet technology, the Asynchronous Transfer Mode (ATM) technology and the Synchronous Digital Hierarchy (SDH) technology. The RPR is a ring network with topology of dual-fibre transmission rings in opposite directions, and the two fibres composing the ring network are referred to as the inner ring and the outer ring, respectively. Since the two fibres can transmit data packets and control packets simultaneously, the theoretical bandwidth usage rate of the RPR is increased by 1 time than that of an SDH/SONET.

However, along with the continuous development of network technologies as well as with the rapid deployment of the Internet, richer and richer categories, formats and service demands of information flows come forth in the network. Consequently, the transport network, dominated by the SDH technology, the ATM technology, the Multiple Service Transport Platform (MSTP) technology, and the Wave-length Division Multiplexing (WDM) technology, cannot well deal with services of the transport layer. Hence, a transport network, which is able to bear multiple categories of services, provide better Quality of Service (QoS), suitable for a MAN and a Wide Area Network (WAN), and which can be extended flexibly and has a low cost in addition, is badly needed in the Next Generation Network (NGN). To meet the above demands, a ring network based on the Multi-Protocol Label Switching (MPLS) technology, referred to as an MPLS ring network, has been derived from the prior art.

ITU-T Rec.Y.1711 has defined the frame format of control information in an MPLS ring network, where the frame may have following categories: connectivity verification (CV), forward defect indication (FDI), backward defect indication (BDI), performance message, ring back request and ring back response.

Therein, a CV message, transmitted in a rate of 1/second, is generated at a source Label Switching Router (LSR), and terminated at a destination LSR. The CV message carries a Trail Termination Source Identifier (TTSI) for detecting network faults. An FDI message, as a response to fault detection, is used for suppressing warnings from other layers above a certain layer having detected the fault. The fault may be a defect of a CV flow, etc. A BDI message, which is inserted in a reverse path (e.g. a reverse LSP), is used for notifying the uplink LSR a defect detected in the destination LSR of the downlink Label Switching Path (LSP).

There exist following problems when adopting existing operation and administration technologies to transmit control information in an MPLS ring network.
1) It is not easy to provide new functions to control information because the frame format of control information has already been determined. Any site in the network must analyze the control information according to the frame format. Thus, the method in the prior art for transmitting control information is poor in flexibility.
2) Since an end-to-end manner is adopted, the control information must be processed by the CPU of a current site before forwarded to a next site. The processing time of each site is more than ten milliseconds or longer. If the network is large and has many sites, the dispersing of the control information throughout the network will be slow. Therefore, fast protection within 50 ms in the ring network cannot be guaranteed when using such a method of processing and forwarding control information site by site to realize protection function.

"Operation & Maintenance mechanism for MPLS networks; Y.1711 (02/04)" discloses mechanisms for user-plane Operation and Maintenance (OAM) functionality in MPLS networks; the label structure indicates a single label field of 20 bits and a new globally reserved label value is introduced; the connectivity verification function is used to detect/diagnose all types of LSP connectivity defects.

US 2003/108029 A1 discloses that a working LSP between neighbor label switched routers (LSRs) in a ring network that utilizes label switching is protected by an LSP that connects the neighbor LSRs of the working LSP in an opposite direction to the working LSP; if the working LSP fails, then packets are switched to the protection LSP.

EP 1802048 A1 discloses a method for discovering topology structure automatically in a MPLS ring network; the method includes that: a dedicated LSP of control information data in a ring network is defined, each node in the MPLS ring network can directly identify according to the value of the label of the dedicated LSP that what the LSP transports is the information of the topology structure of the MPLS ring network, and can determine whether the received topology discovering message is the topology discovering message sent by the node itself.

### Summary

In view of the above, the present invention is to provide a method for transmitting control information in an MPLS ring network, which can enable the transmission of control information faster and more convenient in the MPLS ring network.

A technical solution in accordance with the present invention is achieved as follows.

A method for transmitting control information in an MPLS ring network includes:
assigning a label for a dedicated Label Switching Path to be established from a source site to a destination site, and establishing the dedicated Label Switching Path;
the source site and the destination site are the same site; and
the label is short for enabling the label to be cited directly by index and is a content section which includes not the topology information but the local meanings, the value of the label is not the same as those of Label Switching Paths transmitting services in the MPLS ring network, and is a fixed label value for identifying that what the dedicated Label Switching Path transmits is control information;
the method further includes:
   configuring the label in all sites of the MPLS ring network where the source site is located, and establishing a ring Label Switching Path for the source site;
   adding, in the source site, the label of the ring Label Switching Path into a control information message, and sending the control information message;
   judging, by each site in the MPLS ring network which has received the control information message, whether the site is the destination site of the control information according to a label stored in itself;
   if the site is not the destination site of the control information, transmitting the control information directly to a next site, and storing the control information in the site;
   if the site is the destination site of the control information, terminating the transmission of control information.

The source site is any site in the MPLS ring network; and
the process of assigning the label includes:
configuring a ring Label Switching Path corresponding to each of the sites in the MPLS ring network, and assigning a label to each ring Label Switching Path, wherein the label of one ring Label Switching Path differs from another.

The ring Label Switching Path of each of the sites includes an inner ring and an outer ring, wherein different labels are assigned to the inner ring and the outer ring of the ring Label Switching Path.

The process of assigning the label includes:
assigning a public outer layer label to the ring Label Switching Paths of all the sites in the MPLS ring network for identifying the inner ring and outer ring of each ring Label Switching Path; and
assigning a private inner layer label to each of the sites, wherein the outer layer label and the inner layer label compose an embedded label for identifying the ring Label Switching Path corresponding to each of the sites.

The process of assigning the label includes: establishing a public ring Label Switching Path for all the sites in the MPLS ring network, and
assigning a label for the public ring Label Switching Path;
the process of adding the label of the ring Label Switching Path into a control information message includes: adding, by the source site, its site ID and the label of the public ring Label Switching Path into the control information message;
the process of judging whether the site is the destination site of the control information includes: judging, by each site in the MPLS ring network according to its site ID, whether the site is the destination site of the control information.

A method for transmitting control information in an MPLS ring network includes:
assigning a label for a dedicated Label Switching Path to be established from a source site to a destination site, and establishing the dedicated Label Switching Path;
the source site and the destination site are different sites in the MPLS ring network, and
the label is short for enabling the label to be cited directly by index and is a content section which includes not the topology information but the local meanings, the value of the label is not the same as those of Label Switching Paths transmitting services in the MPLS ring network, and is a fixed label value for identifying that what the dedicated Label Switching Path transmits is control information;
the method further includes:
   configuring the label in the source site and the destination site of the dedicated Label Switching Path;
   adding, in the source site, the label of the dedicated Label Switching Path into a control information message, and sending the control information message which carries the label through the dedicated Label Switching Path;
   judging, by a site in the MPLS ring network, whether the site is the destination site of the control information according to a label stored in the site;
   if the site is not the destination site of the control information, transmitting the control information directly to a next site; and
   if the site is the destination site of the control information, terminating the transmission of control information, and processing the control information by the site;
   wherein the source site is any site in the MPLS ring network, a ring Label Switching Path corresponding to each of the sites in the MPLS ring network is configured, and a configured label of one ring Label Switching Path differs from that of another ring Label Switching Path;
   the ring Label Switching Path of each of the sites comprises an inner ring and an outer ring, and different labels are assigned to the inner ring and the outer ring of the ring Label Switching Path; characterized in that:
      the ring Label Switching Paths of all the sites in the MPLS ring network is assigned with a public outer layer label for identifying the inner rings and the outer rings of all the ring Label Switching Paths, and each of the sites is assigned with a private inner layer label, wherein the outer layer label and the inner layer label compose an embedded label for identifying the ring Label Switching Path corresponding to each of the sites.

A system for transmitting control information in an MPLS ring network includes a plurality of sites; where
a source site and a destination site corresponding to control information are configured to store a label of a dedicated Label Switching Path;
the source site and the destination site are the same site; and
the label is short for enabling the label to be cited directly by index and is a content section which includes not the topology information but the local meanings, the value of the label is not the same as those of Label Switching Paths transmitting services in the MPLS ring network, and is a fixed label value for identifying that what the dedicated Label Switching Path transmits is control information;
the source site is further configured to add the label of a ring Label Switching Path into a control information message, and sending the control information message;
each site in the MPLS ring network where the source site is located is configured to store said label of the ring Label Switching Path, judging whether the site is the destination site of the control information according to a label stored in the site; transmit the control information directly to a next site and store the control information in the site when determining that the site is not the destination site of the control information; terminating the transmission of control information when determining that the site is the destination site of the control information.

A system for transmitting control information in an MPLS ring network includes a plurality of sites; where
a source site and a destination site corresponding to control information are configured to store a label of a dedicated Label Switching Path; characterized in that:
the source site and the destination site are different sites in the MPLS ring network, and
the label is short for enabling the label to be cited directly by index and is a content section which includes not the topology information but the local meanings, the value of the label is not the same as those of Label Switching Paths transmitting services in the MPLS ring network, and is a fixed label value for identifying that what the dedicated Label Switching Path transmits is control information;
the source site is further configured to add the label of the dedicated Label Switching Path into a control information message and transmit the control information message which carries the label through the dedicated Label Switching Path in the MPLS ring network;
any site in the MPLS ring network is configured to receive the control information message, judging whether the site is the destination site of the control information according to a label stored in the site; transmit the control information directly to a next site when determining that the site is not the destination site of the control information; terminating the transmission of control information and processing the control information when determining the site is the destination site of the control information.

As can be seen from the above technical solution, in the method of the present invention for transmitting control information in an MPLS ring network, the control information corresponding to different source and destination sites can be transmitted faster and more conveniently by establishing dedicated LSPs and setting labels for the dedicated LSPs. Then, the control information is transmitted point to point using the established dedicated LSP in the MPLS ring network.

Moreover, in the case that the established dedicated LSP is a ring LSP, after receiving the control information, any of the sites in the MPLS ring network may judge whether the control information is sent out by itself and if it is not, the site may pass the control information to its own CPU for processing and forward the control information to a next site. Thus, transmission of control information in the MPLS ring network is speeded up and time demand for implementing protection function in the MPLS ring network is better satisfied.

### Brief Description of the Drawings

Fig. 1 is a schematic diagram of an LSP established in the first embodiment of the present invention;
Fig.2 is a schematic diagram of a ring LSP established in the second embodiment of the present invention;
Fig.3 is a schematic diagram of another ring LSP established in the second embodiment of the present invention.

### Embodiments of the Invention

In order to make the objectives, technical solutions and advantages of the present invention clearer, the present invention is hereinafter described in detail with reference to the drawings and embodiments.

There are two categories for control information transmitted in an MPLS ring network. One is site control information, which is transmitted between adjacent sites or cross several sites, and used for controlling flow of traffic to implement congestion control and guarantee service fairness in the ring network. The other is whole ring control information, which is to be spread in a whole ring, and mainly used for implementing functions, such as topology discovering and service protection in the ring network. The whole ring control information is quite sensitive to time, and therefore must be spread throughout the whole ring in a short period of time.

In the first embodiment, the transmitting process of the site control information is illustrated as follows.

al. establishing a dedicated LSP as the transmitting channel for the site control information, assigning a special label for the dedicated LSP and configuring the label of the dedicated LSP in the source site and the destination site of the site control information.

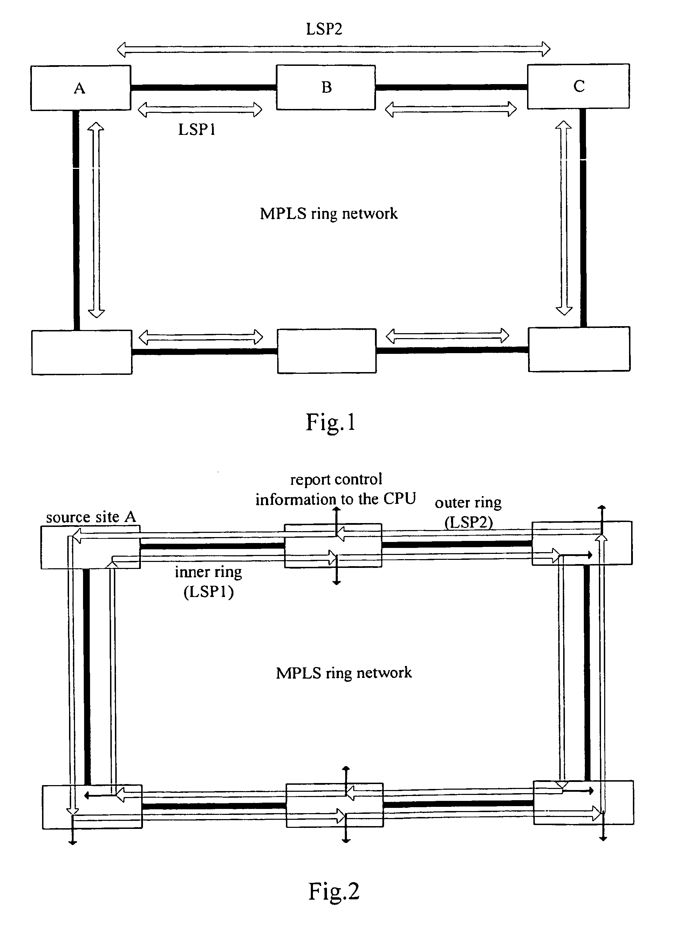

The dedicated LSP is shown in Fig.1. Therein, LSP1 is used for transmitting control information between two adjacent sites, e.g., site A and site B. The LSP1 is a bi-directional path, the source site of which is one of site A and site B, and the destination site of which is the other of site A and site B. LSP2 is used for transmitting control information between site A and site C, and there is an intermediate site, i.e., site B, between site A and site C. The LSP2 is also a bi-directional path, and the source site of LSP2 may be either of site A and site C.

In this process, the sites distinguish different LSPs with the help of labels of the LSPs. The label is a content section which includes not the topology information but the local meanings. The label is usually set short for the convenience of processing, and more specifically, for enabling the label to be cited directly by index. The label value of an LSP may be any value, provided that the value is not the same as those of the LSPs transmitting services in the MPLS ring network. Possibly, a fixed label value may be used for a given LSP so as to identify that what the given LSP transmits is control information.
b1. when it is needed to transmit site control information between the above two sites, transmitting the site control information through the LSP established in the process al. The process b1 specifically includes:
   the sending site writes the label value of the LSP established in process al into a control information message, and sends the message through the MPLS ring network, and the receiving site receives the site control information by resolving the label in the control information, thereby realizing the point to point communication. The sending site may be either of the above two sites.

Taking LSP1 as an example, when needing to send control information to site B, site A will write the label value of LSP1 into the control information message. Then, the message is sent through the MPLS ring network to site B, and site B receives the control information for processing if judging according to the label value of LSP1 that the control information is sent to site B.

In the case of LSP2, when site A needs to send control information to site C, the MPLS ring network may first send the control information to site B. Then, site B directly sends the control information to site C without any processing by itself because the label value of LSP2 has not been configured in site B, which may speed up the transmission of control information.

The method for transmitting control information by other sites is similar to the above process and will not be further described here, that is, the control information is transmitted through a bi-directional LSP established between the source site and the destination site.

In the second embodiment, the transmitting process of the whole ring control information is illustrated as follows: establishing a ring LSP, bearing and transmitting the whole ring control information upon the data channel of the ring LSP. Then, each site in the ring LSP may directly forward the whole ring control information to a next site, and pass the whole ring control information to its own CPU for processing. The CPU performs operation according to the instruction of the whole ring control information, such as updating local topology structure and implementing protection switching.

In practice, there are various methods for establishing a ring LSP. Accordingly, methods for transmitting the whole ring control information are as follows.

Method one is based on the ring LSP shown in Fig.2, which specifically includes:
a2. establishing a group of LSPs for the source site A, which are the inner ring LSP1, and the outer ring LSP2, assigning label values corresponding to the two ring LSPs, and configuring the label values of LSP1 and LSP2 in each site the ring LSPs pass through.
b2. the source site A sends the whole ring control information with the label value(s) of LSP1 and/or LSP2 through the data channels of the LSPs, and if other sites in the MPLS ring network judge according to the label values configured in themselves that a received message is a whole ring control information message transmitted by the LSPs, the other sites pass the whole ring control information to their CPUs for processing and forward the whole ring control information to a next site. The process is implemented by data forwarding modules of the sites themselves, and forwarding delay can be controlled to a range of microseconds.
c2. after the whole ring control information is returned to the source site A after transmitted site by site through the MPLS ring network, and the source site A determines that the source site A is the initiating point of the LSP bearing the whole ring control information, the source site A may terminate the transmission of the whole ring control information.

Likewise, when other sites in the MPLS ring network need to send whole ring control information throughout the network, the ring LSPs established for the sites themselves may be employed. The method for establishing ring LSPs for other sites is the same as that for the source site A, which will not be further described here.

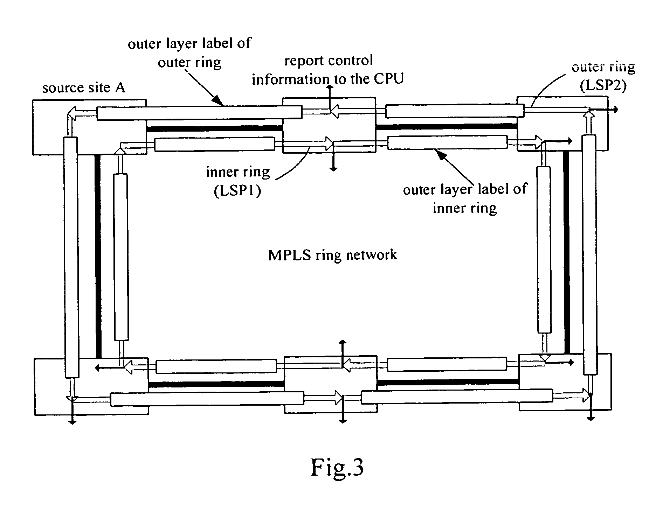

Method two is based on the ring LSP shown in Fig.3, and the transmitting process is specifically described as follows.

In method one, many labels are needed since each site in the MPLS ring network needs to establish two ring LSPs, and each ring LSP needs one label. To reduce the label consumption of LSPs, an embedded label including an outer layer label and an inner layer label is adopted for identifying an LSP. The outer layer labels can be used for establishing two public ring LSPs, that is, an inner ring and an outer ring. Since the directions of the two public ring LSPs are different, two different outer layer labels, which are an outer layer label of outer ring and an outer layer label of inner ring are needed. Each site can use the two outer layer labels to identify the directions of the ring LSPs used by the site. In addition, each site can use the inner layer label to identify the whole ring control information sent by the site. Therein, the number of the assigned inner layer labels equals to the number of the sites in the MPLS ring network.

After receiving a control information message, each site may judge according to the value of the inner layer label in the message whether the information is whole ring control information sent by itself, and terminate the transmitting process if the information is sent by itself; otherwise, report the received whole ring control information to the CPU for processing and forward the whole ring control information to the next site.

Method three uses site IDs to distinguish ring LSPs of different sites in the MPLS ring network.
a3. establishing two ring LSPs in the MPLS ring network, that is, an inner ring LSP1 and an outer ring LSP2. The two ring LSPs pass all sites in the MPLS ring network, and the label values of the two ring LSPs are configured in all the sites.
b3. all the sites use the two ring LSPs established in process a3 to send the whole ring control information, and add their own site IDs into the whole ring control information.
c3. after receiving the whole ring control information transmitted in the ring LSPs, a site in the MPLS ring network judges whether the site IDs in the whole ring control information contains the site ID of itself, if yes, terminates the transmitting process of the whole ring control information; otherwise, forwards the whole ring control information to a next site and reports the whole ring control information to its own CPU for processing.

With the help of method three, the problem of occupying resources due to assigning too many labels can be avoided effectively.

As can be seen from the above embodiments, in the method for transmitting control information in an MPLS ring network in accordance with the present invention, different control information between source and destination sites can be transmitted faster and more conveniently by establishing corresponding dedicated LSPs for the control information in the MPLS ring network.

## Claims

1. A method for transmitting control information in an MPLS ring network, comprising:
assigning a label for a dedicated Label Switching Path to be established from a source site to a destination site, and establishing the dedicated Label Switching Path;
the source site and the destination site are the same site; and
the label is short for enabling the label to be cited directly by index and is a content section which includes not the topology information but the local meanings, the value of the label is not the same as those of Label Switching Paths transmitting services in the MPLS ring network, and is a fixed label value for identifying that what the dedicated Label Switching Path transmits is control information;
the method further comprises:
configuring said label in all sites of the MPLS ring network where the source site is located, and establishing a ring Label Switching Path for the source site;
adding, by the source site, the label of the ring Label Switching Path into a control information message, and sending the control information message;
judging, by each site in the MPLS ring network which has received the control information message, whether the site is the destination site of the control information according to a label stored in the site;
if the site is not the destination site of the control information, transmitting the control information directly to a next site, and storing the control information in the site;
if the site is the destination site of the control information, terminating the transmission of control information;
wherein the source site is any site in the MPLS ring network, and said assigning the label comprises:
configuring a ring Label Switching Path corresponding to each of the sites in the MPLS ring network, and assigning a label to each of the ring Label Switching Paths, wherein the label of one ring Label Switching Path differs from that of another ring Label Switching Path;
wherein the ring Label Switching Path of each of the sites comprises an inner ring and an outer ring, and different labels are assigned to the inner ring and the outer ring of the ring Label Switching Path; **characterized in that**:
said assigning the label to each of the ring Label Switching Paths comprises:
assigning a public outer layer label to the ring Label Switching Paths of all the sites in the MPLS ring network for identifying the inner rings and the outer rings of all the ring Label Switching Paths, and assigning a private inner layer label to each of the sites, wherein the outer layer label and the inner layer label compose an embedded label for identifying the ring Label Switching Path corresponding to each of the sites.

2. The method of Claim 1, wherein said assigning the label comprises:
establishing a public ring Label Switching Path for all the sites in the MPLS ring network, and assigning a label for the public ring Label Switching Path;
said adding the label of the ring Label Switching Path into a control information message comprises: adding, by the source site, its site ID and the label of the public ring Label Switching Path into the control information message;
said judging whether the site is the destination site of the control information comprises: judging, by each site in the MPLS ring network according to its site ID, whether the site is the destination site of the control information.

3. A method for transmitting control information in an MPLS ring network, comprising:
assigning a label for a dedicated Label Switching Path to be established from a source site to a destination site, and establishing the dedicated Label Switching Path; **characterized in that**:
the source site and the destination site are different sites in the MPLS ring network, and
the label is short for enabling the label to be cited directly by index and is a content section which includes not the topology information but the local meanings, the value of the label is not the same as those of Label Switching Paths transmitting services in the MPLS ring network, and is a fixed label value for identifying that what the dedicated Label Switching Path transmits is control information;
the method further comprises:
configuring said label in the source site and the destination site of the dedicated Label Switching Path;
adding, in the source site, the label of the dedicated Label Switching Path into a control information message, and sending the control information message which carries the label through the dedicated Label Switching Path;
judging, by a site in the MPLS ring network, whether the site is the destination site of the control information according to a label stored in the site;
if the site is not the destination site of the control information, transmitting the control information directly to a next site; and
if the site is the destination site of the control information, terminating the transmission of control information, and processing the control information by the site.

4. A system for transmitting control information in an MPLS ring network, comprising: a plurality of sites; wherein
a source site and a destination site corresponding to control information are configured to store a label of a dedicated Label Switching Path;
the source site and the destination site are the same site; and
the label is short for enabling the label to be cited directly by index and is a content section which includes not the topology information but the local meanings, the value of the label is not the same as those of Label Switching Paths transmitting services in the MPLS ring network, and is a fixed label value for identifying that what the dedicated Label Switching Path transmits is control information;
the source site is further configured to add the label of a ring Label Switching Path into a control information message, and sending the control information message;
each site in the MPLS ring network where the source site is located is configured to store said label of the ring Label Switching Path, judging whether the site is the destination site of the control information according to a label stored in the site; transmit the control information directly to a next site and store the control information in the site when determining that the site is not the destination site of the control information; terminating the transmission of control information when determining that the site is the destination site of the control information;
wherein the source site is any site in the MPLS ring network, a ring Label Switching Path corresponding to each of the sites in the MPLS ring network is configured, and a configured label of one ring Label Switching Path differs from that of another ring Label Switching Path;
the ring Label Switching Path of each of the sites comprises an inner ring and an outer ring, and different labels are assigned to the inner ring and the outer ring of the ring Label Switching Path; **characterized in that**:
the ring Label Switching Paths of all the sites in the MPLS ring network is assigned with a public outer layer label for identifying the inner rings and the outer rings of all the ring Label Switching Paths, and each of the sites is assigned with a private inner layer label, wherein the outer layer label and the inner layer label compose an embedded label for identifying the ring Label Switching Path corresponding to each of the sites.

5. A system for transmitting control information in an MPLS ring network, comprising: a plurality of sites; wherein
a source site and a destination site corresponding to control information are configured to store a label of a dedicated Label Switching Path; **characterized in that**:
the source site and the destination site are different sites in the MPLS ring network, and
the label is short for enabling the label to be cited directly by index and is a content section which includes not the topology information but the local meanings, the value of the label is not the same as those of Label Switching Paths transmitting services in the MPLS ring network, and is a fixed label value for identifying that what the dedicated Label Switching Path transmits is control information;
the source site is further configured to add the label of the dedicated Label Switching Path into a control information message and transmit the control information message which carries the label through the dedicated Label Switching Path in the MPLS ring network;
any site in the MPLS ring network is configured to receive the control information message, judging whether the site is the destination site of the control information according to a label stored in the site; transmit the control information directly to a next site when determining that the site is not the destination site of the control information; terminating the transmission of control information and processing the control information when determining the site is the destination site of the control information.

## Patentansprüche

1. Verfahren zum Übertragen von Steuerinformationen in einem MPLS-Ringnetz, das Folgendes umfasst:
Zuweisen eines Etiketts für einen dedizierten Etikettvermittlungspfad, der von einer Quell-Site zu einer Ziel-Site herzustellen ist, und Herstellen des dedizierten Etikettvermittlungspfads ;
wobei die Quell-Site und die Ziel-Site dieselbe Site sind; und
das Etikett kurz ist, um es zu ermöglichen, dass das Etikett direkt durch den Index zitiert wird, und ein Inhaltsabschnitt ist, der nicht die Topologieinformationen, sondern die örtlichen Bedeutungen enthält, wobei der Wert des Etiketts nicht der gleiche wie jene der Etikettvermittlungspfade ist, die Dienste in dem MPLS-Ringnetz übertragen, und ein fester Etikettwert ist, um zu identifizieren, dass das, was der dedizierte Etikettvermittlungspfad überträgt, Steuerinformationen sind;
wobei das Verfahren ferner Folgendes umfasst:
Konfigurieren des Etiketts in allen Sites des MPLS-Ringnetzes, wo die Quell-Site lokalisiert ist, und Herstellen eines Ring-Etikettvermittlungspfads für die Quell-Site;
Hinzufügen des Etiketts des Ring-Etikettvermittlungspfads zu einer Steuerinformationsnachricht und Senden der Steuerinformationsnachricht durch die Quell-Site;
Beurteilen durch jede Site in dem MPLS-Ringnetz, die die Steuerinformationsnachricht empfangen hat, in Übereinstimmung mit einem in der Site gespeicherten Etikett, ob die Site die Ziel-Site der Steuerinformationen ist;
falls die Site nicht die Ziel-Site der Steuerinformationen ist, Übertragen der Steuerinformationen direkt an eine nächste Site und Speichern der Steuerinformationen in der Site;
falls die Site die Ziel-Site der Steuerinformationen ist, Beenden der Übertragung von Steuerinformationen;
wobei die Quell-Site irgendeine Site in dem MPLS-Ringnetz ist und das Zuweisen des Etiketts Folgendes umfasst:
Konfigurieren eines Ring-Etikettvermittlungspfads, der jeder der Sites in dem MPLS-Ringnetz entspricht, und Zuweisen eines Etiketts zu jedem der Ring-Etikettvermittlungspfade, wobei sich das Etikett eines Ring-Etikettvermittlungspfads von dem eines weiteren Ring-Etikettvermittlungspfads unterscheidet;
wobei der Ring-Etikettvermittlungspfad jeder der Sites einen inneren Ring und einen äußeren Ring umfasst, wobei dem inneren Ring und dem äußeren Ring des Ring-Etikettvermittlungspfads verschiedene Etiketten zugewiesen werden; **dadurch gekennzeichnet, dass**:
das Zuweisen des Etiketts zu jedem der Ring-Etikettvermittlungspfade Folgendes umfasst:
Zuweisen eines öffentlichen Außenschicht-Etiketts zu den Ring-Etikettvermittlungspfaden aller Sites in dem MPLS-Ringnetz zum Identifizieren der inneren Ringe und der äußeren Ringe aller Ring-Etikettvermittlungspfade und Zuweisen eines nicht-öffentlichen Innenschicht-Etiketts zu jeder der Sites, wobei das Außenschicht-Etikett und das Innenschicht-Etikett ein eingebettetes Etikett bilden, um den Ring-Etikettvermittlungspfad, der jeder der Sites entspricht, zu identifizieren.

2. Verfahren nach Anspruch 1, wobei das Zuweisen des Etiketts Folgendes umfasst: Herstellen eines öffentlichen Ring-Etikettvermittlungspfads für alle Sites in dem MPLS-Ringnetz und Zuweisen eines Etiketts für den öffentlichen Ring-Etikettvermittlungspfad;
wobei das Hinzufügen des Etiketts des Ring-Etikettvermittlungspfads zu einer Steuerinformationsnachricht Folgendes umfasst: Hinzufügen durch die Quell-Site ihrer Site-ID und des Etiketts des öffentlichen Ring-Etikettvermittlungspfads zu der Steuerinformationsnachricht;
wobei das Beurteilen, ob die Site die Ziel-Site der Steuerinformationen ist, Folgendes umfasst: Beurteilen durch jede Site in dem MPLS-Ringnetz in Übereinstimmung mit ihrer Site-ID, ob die Site die Ziel-Site der Steuerinformationen ist.

3. Verfahren zum Übertragen von Steuerinformationen in einem MPLS-Ringnetz, das Folgendes umfasst:
Zuweisen eines Etiketts für einen dedizierten Etikettvermittlungspfad, der von einer Quell-Site zu einer Ziel-Site herzustellen ist, und Herstellen des dedizierten Etikettvermittlungspfads; **dadurch gekennzeichnet, dass**:
die Quell-Site und die Ziel-Site verschiedene Sites in dem MPLS-Ringnetz sind, und
das Etikett kurz ist, um es zu ermöglichen, dass das Etikett direkt durch den Index zitiert wird, und ein Inhaltsabschnitt ist, der nicht die Topologieinformationen, sondem die örtlichen Bedeutungen enthält, wobei der Wert des Etiketts nicht der gleiche wie jene der Etikettvermittlungspfade ist, die Dienste in dem MPLS-Ringnetz übertragen, und ein fester Etikettwert ist, um zu identifizieren, dass das, was der dedizierte Etikettvermittlungspfad überträgt, Steuerinformationen sind;
wobei das Verfahren ferner Folgendes umfasst:
Konfigurieren des Etiketts in der Quell-Site und der Ziel-Site des dedizierten Etikettvermittlungspfads;
Hinzufügen des Etiketts des dedizierten Etikettvermittlungspfads zu einer Steuerinformationsnachricht und Senden der Steuerinformationsnachricht, die das Etikett führt, durch den dedizierten Etikettvermittlungspfad in der Quell-Site;
Beurteilen durch eine Site in dem MPLS-Ringnetz in Übereinstimmung mit einem in der Site gespeicherten Etikett, ob die Site die Ziel-Site der Steuerinformationen ist;
falls die Site nicht die Ziel-Site der Steuerinformationen ist, Übertragen der Steuerinformationen direkt zu einer nächsten Site; und
falls die Site die Ziel-Site der Steuerinformationen ist, Beenden der Übertragung von Steuerinformationen und Verarbeiten der Steuerinformationen durch die Site.

4. System zum Übertragen von Steuerinformationen in einem MPLS-Ringnetz, das Folgendes umfasst: mehrere Sites; wobei
eine Quell-Site und eine Ziel-Site, die Steuerinformationen entsprechen, konfiguriert sind, um ein Etikett eines dedizierten Etikettvermittlungspfads zu speichern;
die Quell-Site und die Ziel-Site dieselbe Site sind; und
das Etikett kurz ist, um es zu ermöglichen, dass das Etikett direkt durch den Index zitiert wird, und ein Inhaltsabschnitt ist, der nicht die Topologieinformationen, sondern die örtlichen Bedeutungen enthält, wobei der Wert des Etiketts nicht der gleiche wie jene der Etikettvermittlungspfade ist, die Dienste in dem MPLS-Ringnetz übertragen, und ein fester Etikettwert ist, um zu identifizieren, dass das, was der dedizierte Etikettvermittlungspfad überträgt, Steuerinformationen sind;
die Quell-Site ferner konfiguriert ist, um das Etikett eines Ring-Etikettvermittlungspfads zu einer Steuerinformationsnachricht hinzuzufügen und die Steuerinformationsnachricht zu senden;
jede Site in dem MPLS-Ringnetz, wo sich die Quell-Site befindet, konfiguriert ist, um das Etikett des Ring-Etikettvermittlungspfads zu speichern, in Übereinstimmung mit
einem in der Site gespeicherten Etikett zu beurteilen, ob die Site die Ziel-Site der Steuerinformationen ist; die Steuerinformationen direkt zu einer nächsten Site zu übertragen und die Steuerinformationen in der Site zu speichern, wenn bestimmt wird, dass die Site nicht die Ziel-Site der Steuerinformationen ist; und die Übertragung von Steuerinformationen zu beenden, wenn bestimmt wird, dass die Site die Ziel-Site der Steuerinformationen ist;
wobei die Quell-Site irgendeine Site in dem MPLS-Ringnetz ist, ein Ring-Etikettvermittlungspfad, der jeder der Sites in dem MPLS-Ringnetz entspricht, konfiguriert ist und sich ein konfiguriertes Etikett eines Ring-Etikettvermittlungspfads von dem eines weiteren Ring-Etikettvermittlungspfads unterscheidet;
der Ring-Etikettvermittlungspfad jeder der Sites einen inneren Ring und einen äußeren Ring umfasst, und dem inneren Ring und dem äußeren Ring des Ring-Etikettvermittlungspfads verschiedene Etiketten zugewiesen sind; **dadurch gekennzeichnet, dass**:
den Ring-Etikettvermittlungspfaden aller Sites in dem MPLS-Ringnetz ein öffentliches Außenschicht-Etikett zum Identifizieren der inneren Ringe und der äußeren Ringe aller Ring-Etikettvermittlungspfade zugewiesen ist und jeder der Sites ein nichtöffentliches Innenschicht-Etikett zugewiesen ist, wobei das Außenschicht-Etikett und das Innenschicht-Etikett ein eingebettetes Etikett bilden, um den Ring-Etikettvermittlungspfad, der jeder der Sites entspricht, zu identifizieren.

5. System zum Übertragen von Steuerinformationen in einem MPLS-Ringnetz, das Folgendes umfasst: mehrere Sites; wobei
eine Quell-Site und eine Ziel-Site, die Steuerinformationen entsprechen, konfiguriert sind, um ein Etikett eines dedizierten Etikettvermittlungspfads zu speichern; **dadurch gekennzeichnet, dass**:
die Quell-Site und die Ziel-Site verschiedene Sites in dem MPLS-Ringnetz sind, und
das Etikett kurz ist, um es zu ermöglichen, dass das Etikett direkt durch den Index zitiert wird, und ein Inhaltsabschnitt ist, der nicht die Topologieinformationen, sondern die örtlichen Bedeutungen enthält, wobei der Wert des Etiketts nicht der gleiche wie jene der Etikettvermittlungspfade ist, die Dienste in dem MPLS-Ringnetz übertragen, und ein fester Etikettwert ist, um zu identifizieren, dass das, was der dedizierte Etikettvermittlungspfad überträgt, Steuerinformationen sind;
die Quell-Site ferner konfiguriert ist, um das Etikett des dedizierten Etikettvermittlungspfads zu einer Steuerinformationsnachricht hinzuzufügen und die Steuerinformationsnachricht, die das Etikett führt, durch den dedizierten Etikettvermittlungspfad in dem MPLS-Ringnetz zu übertragen;
jede Site in dem MPLS-Ringnetz konfiguriert ist, um die Steuerinformationsnachricht zu empfangen, in Übereinstimmung mit einem in der Site gespeicherten Etikett zu beurteilen, ob die Site die Ziel-Site der Steuerinformationen ist; die Steuerinformationen direkt zu einer nächsten Site zu übertragen, wenn bestimmt wird, dass die Site nicht die Ziel-Site der Steuerinformationen ist; die Übertragung der Steuerinformationen zu beenden und die Steuerinformationen zu verarbeiten, wenn bestimmt wird, dass die Site die Ziel-Site der Steuerinformationen ist.

## Revendications

1. Procédé pour la transmission d'informations de commande dans un réseau en anneau MPLS (MultiProtocol Label Switching pour Commutation d'Étiquettes Multiprotocole), comprenant :
l'affectation d'une étiquette à un Trajet à Commutation d'Étiquettes dédié devant être établi d'un site source à un site destinataire, et l'établissement du Trajet à Commutation d'Étiquettes dédié ;
le site source et le site destinataire étant le même site ; et
l'étiquette étant courte pour permettre la citation directe de l'étiquette à partir d'un index et étant une section de contenu qui comprend non pas les informations de topologie mais les significations locales, la valeur de l'étiquette n'étant pas la même que celles de services de transmission par Trajets à Commutation d'Étiquettes dans le réseau en anneau MPLS, et étant une valeur d'étiquette fixe permettant d'identifier que ce que transmet le Trajet à Commutation d'Étiquettes dédié est constitué d'informations de commande ;
le procédé comprenant en outre :
la configuration de ladite étiquette sur tous les sites du réseau en anneau MPLS sur lequel se trouve le site source, et l'établissement d'un Trajet à Commutation d'Étiquettes en anneau pour le site source ;
l'ajout, par le site source, de l'étiquette du Trajet à Commutation d'Étiquettes en anneau dans un message d'informations de commande, et l'envoi du message d'informations de commande ;
le fait d'évaluer, par chaque site du réseau en anneau MPLS ayant reçu le message d'informations de commande, si le site est le site destinataire des informations de commande conformément à une étiquette stockée dans le site ;
si le site n'est pas le site destinataire des informations de commande, la transmission directe des informations de commande à un site suivant, et le stockage des informations de commande dans le site ;
si le site est le site destinataire des informations de commande, la terminaison de la transmission des informations de commande ;
le site source étant un site quelconque du réseau en anneau MPLS, et ladite affectation de l'étiquette comprenant :
la configuration d'un Trajet à Commutation d'Étiquettes en anneau correspondant à chacun des sites du réseau en anneau MPLS, et l'affectation d'une étiquette à chacun des Trajets à Commutation d'Étiquettes en anneau, l'étiquette d'un Trajet à Commutation d'Étiquettes en anneau étant différente de celle d'un autre Trajet à Commutation d'Étiquettes en anneau ;
le Trajet à Commutation d'Étiquettes en anneau de chacun des sites comprenant un anneau interne et un anneau externe, et des étiquettes différentes étant affectées à l'anneau interne et à l'anneau externe du Trajet à Commutation d'Étiquettes en anneau ;
**caractérisé en ce que** :
ladite affectation de l'étiquette à chacun des Trajets à Commutation d'Étiquettes en anneau comprend :
l'affectation d'une étiquette de couche externe publique aux Trajets à Commutation d'Étiquettes en anneau de tous les sites du réseau en anneau MPLS pour identifier les anneaux internes et les anneaux externes de tous les Trajets à Commutation d'Étiquettes en anneau, et l'affectation d'une étiquette de couche interne privée à chacun des sites, l'étiquette de couche externe et l'étiquette de couche interne composant une étiquette intégrée permettant d'identifier le Trajet à Commutation d'Étiquettes en anneau correspondant à chacun des sites.

2. Procédé selon la revendication 1, dans lequel ladite affectation de l'étiquette comprend : l'établissement d'un Trajet à Commutation d'Étiquettes en anneau public pour tous les sites du réseau en anneau MPLS et l'affectation d'une étiquette au Trajet à Commutation d'Étiquettes en anneau public ;
ledit ajout de l'étiquette du Trajet à Commutation d'Étiquettes en anneau dans un message d'informations de commande comprend : l'ajout, par le site source, de son ID de site et de l'étiquette du Trajet à Commutation d'Étiquettes en anneau public dans le message d'informations de commande ;
ledit fait d'évaluer si le site est le site destinataire des informations de commande comprend : le fait d'évaluer, par chaque site du réseau en anneau MPLS en fonction de son ID de site, si le site est le site destinataire des informations de commande.

3. Procédé pour la transmission d'informations de commande dans un réseau en anneau MPLS, comprenant :
l'affectation d'une étiquette à un Trajet à Commutation d'Étiquettes dédié devant être établi d'un site source à un site destinataire, et l'établissement du Trajet à Commutation d'Étiquettes dédié ; **caractérisé en ce que** :
le site source et le site destinataire sont des sites différents du réseau en anneau MPLS, et
l'étiquette est courte pour permettre à l'étiquette d'être citée directement à partir d'un index et est une section de contenu qui comprend non pas les informations de topologie mais les significations locales, la valeur de l'étiquette n'est pas la même que celles de services de transmission par Trajets à Commutation d'Étiquettes sur le réseau en anneau MPLS, et est une valeur d'étiquette fixe permettant d'identifier que ce que transmet le Trajet à Commutation d'Étiquettes dédié est constitué d'informations de commande ;
le procédé comprenant en outre :
la configuration de ladite étiquette dans le site source et le site destinataire du Trajet à Commutation d'Étiquettes dédié ;
l'ajout, dans le site source, de l'étiquette du Trajet à Commutation d'Étiquettes dédié dans un message d'informations de commande, et l'envoi du message d'informations de commande qui achemine l'étiquette par l'intermédiaire du Trajet à Commutation d'Étiquettes dédié ;
le fait d'évaluer, par un site du réseau en anneau MPLS, si le site est le site destinataire des informations de commande conformément à une étiquette stockée dans le site ;
si le site n'est pas le site destinataire des informations de commande, la transmission directe des informations de commande à un site suivant ; et
si le site est le site destinataire des informations de commande, la terminaison de la transmission des informations de commande, et le traitement des informations de commande par le site.

4. Système pour la transmission d'informations de commande dans un réseau en anneau MPLS, comprenant : une pluralité de sites ; dans lequel
un site source et un site destinataire correspondant aux informations de commande sont configurés pour stocker une étiquette d'un Trajet à Commutation d'Étiquettes dédié ;
le site source et le site destinataire sont le même site ; et
l'étiquette est courte pour permettre à l'étiquette d'être citée directement à partir d'un index et est une section de contenu qui comprend non pas les informations de topologie mais les significations locales, la valeur de l'étiquette n'est pas la même que celles de services de transmission par Trajets à Commutation d'Étiquettes dans le réseau en anneau MPLS, et est une valeur d'étiquette fixe permettant d'identifier que ce que transmet le Trajet à Commutation d'Étiquettes dédié est constitué d'informations de commande ;
le site source est en outre configuré pour ajouter l'étiquette d'un Trajet à Commutation d'Étiquettes en anneau dans un message d'informations de commande, et envoyer le message d'informations de commande ;
chaque site du réseau en anneau MPLS dans lequel se trouve le site source est configuré pour stocker ladite étiquette du Trajet à Commutation d'Étiquettes en anneau, évaluer si le site est le site destinataire des informations de commande conformément à une étiquette stockée dans le site ; transmettre directement les informations de commande à un site suivant et stocker les informations de commande dans le site lorsqu'il est déterminé que le site n'est pas le site destinataire des informations de commande ; terminer la transmission des informations de commande lorsqu'il est déterminé que le site est le site destinataire des informations de commande ;
dans lequel le site source est un site quelconque du réseau en anneau MPLS, un Trajet à Commutation d'Étiquettes en anneau correspondant à chacun des sites du réseau en anneau MPLS est configuré, et une étiquette configurée d'un Trajet à Commutation d'Étiquettes en anneau est différente de celle d'un autre Trajet à Commutation d'Étiquettes en anneau ;
le Trajet à Commutation d'Étiquettes en anneau de chacun des sites comprend un anneau interne et un anneau externe, et des étiquettes différentes sont affectées à l'anneau interne et à l'anneau externe du Trajet à Commutation d'Étiquettes en anneau ;
**caractérisé en ce que** :
on affecte aux Trajets à Commutation d'Étiquettes en anneau de tous les sites du réseau en anneau MPLS une étiquette de couche externe publique permettant d'identifier les anneaux internes et les anneaux externes de tous les Trajets à Commutation d'Étiquettes en anneau, et on affecte à chacun des sites une étiquette de couche interne privée, l'étiquette de couche externe et l'étiquette de couche interne composant une étiquette intégrée permettant d'identifier le Trajet à Commutation d'Étiquettes en anneau correspondant à chacun des sites.

5. Système pour la transmission d'informations de commande dans un réseau en anneau MPLS, comprenant : une pluralité de sites ; dans lequel
un site source et un site destinataire correspondant aux informations de commande sont configurés pour stocker une étiquette d'un Trajet à Commutation d'Étiquettes dédié ; **caractérisé en ce que** :
le site source et le site destinataire sont des sites différents dans le réseau en anneau MPLS, et
l'étiquette est courte pour permettre à l'étiquette d'être citée directement à partir d'un index et est une section de contenu qui comprend non pas les informations de topologie mais les significations locales, la valeur de l'étiquette n'est pas la même que celles de services de transmission de Trajets à Commutation d'Étiquettes dans le réseau en anneau MPLS, et est une valeur d'étiquette fixe permettant d'identifier que ce que transmet le Trajet à Commutation d'Étiquettes dédié est constitué d'informations de commande ;
le site source est en outre configuré pour ajouter l'étiquette du Trajet à Commutation d'Étiquettes dédié dans un message d'informations de commande et transmettre le message d'informations de commande qui achemine l'étiquette par l'intermédiaire du Trajet à Commutation d'Étiquettes dédié dans le réseau en anneau MPLS ;
un site quelconque du réseau en anneau MPLS est configuré pour recevoir le message d'informations de commande, évaluer si le site est le site destinataire des informations de commande conformément à une étiquette stockée dans le site ; transmettre directement les informations de commande à un site suivant lorsqu'il est déterminé que le site n'est pas le site destinataire des informations de commande ; terminer la transmission des informations de commande et traiter les informations de commande lorsqu'il est déterminé que le site est le site destinataire des informations de commande.
